(19) Europäisches Patentamt
European Patent Office
Office européen des brevets

(11) **EP 1 743 529 A1**

## (12) EUROPEAN PATENT APPLICATION

(43) Date of publication:
**17.01.2007 Bulletin 2007/03**

(51) Int Cl.:
*A23J 3/18* $^{(2006.01)}$   *A23K 1/18* $^{(2006.01)}$

(21) Application number: **05015356.8**

(22) Date of filing: **14.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Nestec, Ltd.**
  **1800 Vevey (CH)**
• **Tate & Lyle PLC**
  **Sugar Quay, Lower Thames Street**
  **London EC3R 6DQ (GB)**

(72) Inventors:
• **Pibarot, Patrick**
  **80170 Guillaucourt (FR)**

• **Reynes, Pierre**
  **80090 Amiens (FR)**
• **Redl, Andreas**
  **9840 Zevergem (BE)**
• **Maesmans, Geert**
  **3020 Herent (BE)**
• **Scheerlinck, Wim**
  **9470 Denderleeuw (BE)**

(74) Representative: **Rupp, Christian et al**
  **Mitscherlich & Partner**
  **Patent- und Rechtsanwälte**
  **Sonnenstrasse 33**
  **80331 München (DE)**

## (54) Method for preparing plasticized wheat gluten compositions

(57)   A method for manufacturing plasticized gluten compositions, the method comprises the step of:
- mixing at least gluten and a plasticizer by applying a SME (Specific Mechanical Energy) of less than 250 kJ/kg,
- wherein the content of the plasticizer is below 40% weight of the total mixing mass.

The invention also relates to the use of plasticized gluten for the manufacture of a chewy petfood having a high breaking force.

## Description

The subject of this application are improved methods for preparing plasticized vital wheat gluten compositions having improved flexibility regarding transformation, in human and animal food applications as well as a chewy petfood.

## State of the art:

Plasticized wheat gluten compositions for human and animal food have been previously described in the prior art. Gluten is a protein and has been described as a high molecular weight polymer (Wrigley, et al. 1996. Glutenin polymers - Natures largest proteins. Royal Australian Chemical Institute: North Melbourne, Australian p. 316), where glutenin subunits are linked by interchain disulfide bonding of cysteine residues. (Graveland, A. et al. 1985. A model for the molecular structure of the glutenins from wheat flour. J Cereal Sci. Vol. 3:1-6).

Moreover, previously documented is the fact that gluten is considered a glassy polymer that has a glass transition temperature which depends on plasticizer content and pressure. (Hoseney, R.C., et al. 1986. Wheat gluten: a glassy polymer. Cereal Chem. 63:285-286.) Furthermore, gluten viscosity will not decrease upon heating but instead will level off or increase due to crosslinking reactions. (Attenburrow et al., Rheological properties of wheat gluten. 1990. J. Cereal Sci. 12:1-14).

Knowledge of the crosslinking reactions is important to understanding thermoplastic extrusion processing. The formation of the final molecular network formed with gluten and glycerol (as a plasticizer) involves the disassociation and unfolding of the macromolecules, which allow them to recombine and to crosslink through specific linkages. (Redl, A., et al. 1999. Rheological properties of gluten plasticized with glycerol: dependence on temperature, glycerol content and mixing conditions. Rheol. Acta 38:311-320.) Therefore, it is known that glycerol has a plasticizing affect on gluten.

The combination of gluten with glycerol has been used in a variety of foods. In US 6,007,858 glycerol is used a humectant to preserve gluten. In this patent, up to 15% wheat gluten was mixed with glycerol or maltodextrin to prepare tamale rolls.

WO 0008944 describes a composition for the preparation of chewing gums. Plasticized proteinaceous materials are disclosed which are prepared by a batch process or prepared continuously by mixing the protein with a plasticizer. Batch processing is performed by utilising a Brabender Torque rheometer (high shear batch mixing). Continuous plasticization is performed by utilising a counter-rotating conical twin-screw extruder. Typical processing conditions utilised thereby are a processing temperature of 70°C-100°C, and a processing torque of 500 to 3000 mg. Among the different proteinaceous materials, zein and wheat gluten are cited as the preferred proteinaceous materials. The materials are used as an ingredient for preparing non-sticking chewing gum.

The object of US 6,818,245 is to provide a digestible degradable gluten composition that can be stored for a prolonged period of time without degradation and used as a gum base for chewing gums. This object was realised by developing vital wheat gluten in a non-aqueous medium (i.e. a medium having an $a_w$ <0,8). In a typical preparation, vital wheat gluten and a plasticizer are mixed together from 5 minutes to an hour at a temperature between 50°C and 90°C, typically 58°C, in a mixer until 75% of the maximum torque is obtained. Mixing must be stopped when 75% of the torque value is reached so there is not a loss in mechanical properties of the gluten mixture, e.g., to allow the gluten to unfold, and to restore their interactions, i.e. H-bridges, hydrophobic and ionic bonds, sulphur bridges and cross-links. The ratio of vital wheat gluten compared to "non-aqueous" medium is 20:80 and 60:40. In the majority of the examples cited in this patent utilized 50% vital wheat gluten mixed with 50% glycerol.

Other work on the behaviour of vital wheat gluten plasticized with glycerol was performed by A. Redl, S. Guilbert, et al.. The results of that work were published in several scientific journals, such as "Rheoligical properties of gluten plasticized with glycerol: dependence on temperature, glycerol content and mixing conditions", Rheologica Acta Vol. 38: 311-320 (1999). This article describes using a Haake batch mixer to provide specific mechanical energy (SME) to a mixture of gluten and glycerol from 4.5 to 32.5 minutes to determine the affects of torque on batch mixing. The Glycerol content varied from 30-60% and the higher levels of glycerol required larger SME values. The range of SME varied from 1000 - 2000 KJ/Kg. Further the operating temperature was maintainted at 80°C.

The publications Les Cahiers de Rhéologie, (1997), p.339-347, and J. Agric. Food Chem. (1999), vol. 47, p. 538-543 are related to the preparation of glycerol-plasticized wheat gluten compositions utilising torque to develop a dough. Thereby it is observed that as the torque increases, the gluten/glycerol blend, originally showing the consistence of a sand/water blend, changes its consistency into a cohesive plastic and very sticky dough. When the maximum torque is surpassed, the gluten/glycerol dough aspect changes into a fairly glossy, non-sticky and very elastic material. The temperature change in the gluten/glycerol blends during mixing is characterised by a sigmoid shape curve with the turning point at the maximum torque.

Furthermore it is observed that, to a certain extent, these temperature increases result in irreversible changes of the plasticized material whereby the final product obtained may no longer be suitable for the applications mentioned above. The ratio between gluten and plasticizer in these applications varies between 75:25 and 60:40.

In Cereal Chemistry, 1999, vol. 76, p.361-369, by the same authors, the extrusion of wheat gluten plasticized with glycerol is discussed. This publication concludes that extrusion at low barrel temperatures (<60°C) is limited because of increasing viscosity. The increase in viscosity causes the die pressure and torque to increase past the limits of the extruder. It is further observed that specific mechanical energy input (SME) is at least 638 kJ/kg as disclosed in table I of that same publication.

In order to obtain plasticized wheat gluten compositions, a common denominator in the above cited prior art is the use of dough development conditions or shear mixing conditions that result in torque and temperature increases of the composition during processing.

Because wheat gluten becomes more reactive at increasing temperatures, cross-linking occurs, and as a result thereof, viscosity of the plasticized material further develops. Thereby a cascade of events occurs consisting in further temperature increases, additional cross-linking and further viscosity development. This can lead to degradation and even burning of the gluten based material. The above described self-catalysing process can be controlled to a certain extent, by increasing plasticizer content of the gluten-based composition.

As a result of these conditions, the products obtained by these prior art processes do show a number of shortcomings, such as:

- diminished transformation possibilities: irreversible changes occurring in the plasticized mass, make that if this mass needs to be reshaped, it must undergo a thermal treatment whereby the temperature now required will exceed the temperature of the previous processing step,
- and/or a relatively low extensibility: due to the autocatalytic process, the plasticized mass may become more and more rigid (reduced elongation at break, reduced flexibility), while tear strength increases,
- And/or increased plasticizer content: this compensates to a certain extent loss in transformation possibilities and provides some flexibility with regard to mechanical properties. As a result of the above cited shortcomings, the degree of incorporation of prior art plasticized wheat gluten in food, feed and non-food applications is limited.

Furthermore, US 2,586,675 describes a method of making a chewing gum that utilizes gluten and glycerin to prevent the gum from hardening and drying out. The gum is maintained in an elastic and chewable state by combining 50-85% gluten with 15-30% glycerin, a sweet substance, and allowing the mixture to ripen from 1 to 6 hours for the .plasticizer to penetrate the gluten. However, the process for obtaining such a plastic material is quite lengthy and difficult to put into practice in an industrial environment.

In view of the above cited prior art, the problem to be solved is therefore to provide an improved process for preparing plasticized gluten compositions.

Preferably these compositions contain a low plasticizer content (e.g. below 40% by weight of the plasticized material), whereby the plasticized material does show good cohesive' properties, high extensibility and easy transformation properties.

The origin of the gluten is preferably wheat or other cereals.

Cohesive properties are thereby reflected by stress-at-break values and extensibility by elongation-at-break values.

Easy transformation properties are reflected by the possibility to shape/reshape the plasticized material at temperatures below 70°C.

This has now been realized by the process according to the present invention.

The invention proposes a continuous mixing process for preparing plasticized wheat gluten compositions, composed of 60-85 parts by weight of vital wheat gluten and between 15 to 40 parts by weight of a plasticizer:

- The wheat gluten and plasticizer can be fed into a mixing device, and
- the components can be mixed and homogenized at relatively low temperatures and with a low content of plasticizer, whereby the specific mechanical energy input (SME) is less than 250 kJ/kg.

The mixing is preferably carried out continuously using a continuous mixing device.

E.g. the mixing and homogenization is carried out by means of a mixing screw configuration allowing mixing and homogenization.

Preferably the temperature of the equipment is set at a temperature between -10°C and 55°C, more preferred -10°C and 40°C.

The advantage of this low-temperature conditions is that the gluten molecules do not unfold. At least the gluten molecules unfold without breaking the intermolecular and intramolecular disulfide bonds, thus maintaining the elasticity such that the final state of the molecule is still springy.

The plasticizer may be selected from the group of polyhydroxy alcohols, starch hydrolysates, lower fatty acids (C2 up to C12), hydroxyalkylamines, hydroxy acids, polycarboxylic acids and urea.

The polyhydroxy alcohols are selected among glycerol, ethylene glycol, propylene glycol, di-ethylene glycol, tri-ethylene glycol and sugar alcohols and may contain up to 30% by weight of water. The sugar alcohols are selected among sorbitol, maltitol, xylitol, mannitol, lactitol, erythritol, isomalt, and hydrogenated starch hydrolysates.

The preferred polyhydroxy alcohols used are selected among glycerol, ethylene glycol, propylene glycol, di-ethylene glycol and tri-ethylene glycol, glycerol being the most preferred.

The hydroxy acids may be selected among lactic acid, malic acid or tartaric acid, gluconic acid, and salts thereof.

The polycarboxylic acids are selected among succinic acid, adipic acid, citric acid, isocitric acid, glucaric acid and salts thereof.

The wheat gluten material as such may show some variability in rheological properties, as illustrated by Alveograph measurements, or by Brabender Plastograph measurements. These variations are due to the origins of the wheat raw material used, to variations in harvest conditions, and to variations in processing conditions.

Suitable continuous mixers can be selected among continuous screw mixers, continuous ribbon blenders and extruders equipped with a screw configuration allowing mixing without substantial mechanical energy input. Such types of screw configurations are known to the skilled technician.

In a preferred embodiment an extruder is used containing the required screw configuration. When using an extruder, it is advantageous to set the barrel and screw temperature between -10°C and 55°C. As a result thereof the barrel temperature at the mixing screw section should not surpass 60°C, preferably 50°C. At the same time the temperature of the materials exiting the continuous mixing unit will not surpass 90°C, preferably 80°C.

In another advantageous embodiment, the plasticized wheat gluten material is composed of 65-75 parts by weight vital wheat gluten and 35-25 parts by weight of plasticizer.

In a preferred embodiment the plasticizer is glycerol. This glycerol may contain up to 20% water.

Depending on the processing conditions in combination with the quantities of ingredients used, a variety of suitable plasticized materials can be obtained. The properties of these compositions may vary from homogeneous, plastic and deformable to tough, rubber-elastic and highly extensible.

Homogeneous, plastic and deformable hereby means that the material exiting the continuous mixing device, and being stored during 1-24 hours, can be (re)shaped using mild conditions (T<50°C).

The plasticized compositions exiting the continuous mixing device can be used as such or further processed and shaped. Further processing and shaping may be performed by e.g. by compression moulding, calendering, lamination transformation and/or by microwave treatment.

Compared to the compositions of the prior art cited above, less extreme processing conditions (temperature and specific mechanical energy input SME) are needed to obtain well shaped rubber-elastic products. At the same time the intermediate and end-materials may comprise less plasticizer and more gluten protein. A reduced plasticizer content may be advantageous in a number of food and/or feed applications were a too high content of low MW polyol plasticizer is not desirable (e.g. pet foods, chewy confectionery, meat imitations, etc.). The desirable content of low molecular weight polyols such as glycerol and propylene glycol in these applications is typically below 25% by weight, preferably below 20% by weight of the final compositions.

The plasticized materials of the invention can be used as intermediates for non-food applications, also. Via compression moulding, calendering or lamination transformation, or any other processing method using rubber-processing conditions, biodegradable objects can be made showing a broad range of mechanical properties. The intermediate plasticized gluten material can thereby be further processed into e.g. flexible sheets, or three-dimensional forms.

In a further aspect of the invention, compositions can be prepared by combining a range of products with the plasticized wheat gluten prepared according to the process of the invention. These products can be added in an amount between 0.1-40% by weight of the composition, during or after the step of preparing the plasticized wheat gluten. More preferably these products can be added in an amount between 0.5-25% and most preferably between 1-15% by weight of the composition.

These products may be selected among the by-products obtained during processing of agricultural or forest raw materials, polysaccharides and derivatives thereof, other proteins of vegetable or animal origin, mineral compounds, synthetic polymers and/or mixtures thereof.

The agricultural by-products may comprise by-products from the wet and/or dry-milling of cereals, in particular maize and wheat, from the processing of oleaginous materials, including but not limited to soy, sunflower or rapeseed, from the processing of other major crops such as, but not limited to, sugar cane, sugar beet, potato, or tapioca.

Polysaccharides include but are not limited to starches in native or modified form, cellulose and derivatives thereof, beta glucans, inulin-type polysaccharides, pectins, arabinoxylans, plant gums or microbial gums.

Other proteins include but are not limited to e.g. soy concentrates and isolates, leguminous proteins, casein and derivatives thereof, whey proteins, fish proteins, or animal proteins including plasma proteins.

Further, also additives can be incorporated, such as colouring or flavouring additives, amino acids, peptides, vitamins, stabilizers, and/or emulsifiers.

In a particular embodiment of the invention, chewy treats for pet animals are prepared comprising the plasticized wheat gluten obtained by the process of the invention. These compositions may further contain up to 20% additional ingredients belonging to the products disclosed in the previous paragraph.

The materials thus obtained are characterized by their high flexibility in combination with long chewing times.

The invention for the first time proposes to use plasticized gluten for producing a chewy petfood treat. This is surprising insofar as a chewy petfood treat has physical properties which are completely different to those of a chewing gum. It has been especially surprising that the high breaking force necessary for a pet chew could be achieved using plasticized gluten.

The physical parameters which differentiate a chewy gum from a pet chew such as a chewy petfood treat are e.g.:

|  | Pet Chew | Chewing Gum |
|---|---|---|
| Elongation: | 300 to 600 % | 1000 up to over 2000% |
| Breaking force: | 200 to 600 N | <10 N |

Flexibility of the chewy treats of the inventions is reflected by the elongation of a standard piece when submitted to a standardized tearing operation. Maximum elongation values of at least 200%, preferably at least 300% and more preferably at least 400% are obtained. Chewing times are at least 20 minutes.

The invention will now be illustrated by a number of examples.

EXAMPLES

*Materials:*

- Vital wheat gluten, (Amygluten 110 & 160) 94% d.s. Amygluten 160 has a dough development time of 10 min. as determined in a counter rotating batch mixer (Brabender Plastograph) while Amygluten 110 has a dough development time of 5 min. in the same conditions. These time values correspond to the maximum torque value measured in the plastograph while mixing a composition of 100 parts by weight gluten and 53 parts by weight glycerol

- Food grade glycerol (14% water content)

*Equipment:*

Extrusion is performed with a co-rotating, self-wiping, twin-screw extruder with a barrel diameter (D) of 53 mm (Clextral Evolum 53). The extruder barrel consists of 9 zones of 212 mm length, each zone being equipped with an independent temperature control based on resistive heaters and water circulation in a double jacket. The 5th zone is equipped with an opening. The feeding zone is cooled by water circulation. The total length of the screw is 36D. Each screw is composed of double flighted right-handed screw elements with different pitches, and a kneading section of five paddles with a right-handed staggering of 45°. Gluten powder is fed with a twin screw gravimetric feeder and glycerol with a metering pump.

Two screw configurations were tested. In a first series of trials the kneading element is located between the 5th and 6th zone. In a second series, the kneading element was placed at the very end of the screw. This allows developing viscosity as late as possible. Barrel temperature mentioned below was determined at the location of the kneading elements (respectively at the 5th and 6th zone, and at the end of the screw).

The SME value in the framework of the present invention has been determined according to the following equation:

$$SME = N/N_{max} * 1/D * U * I * 0.9$$

where:

$N$ = screw speed read
$N_{max}$ = maximal screw speed of the extruder
$D$ = dry mix rate (kg/h)

*U* = armature potential difference on DC motor (V)
*I* = amperage consumption by the electrical motor (A)
0.9 = coefficient taking in account losses between electrical motor and gear box

**Example 1-3:**

In the following examples a screw configuration containing the kneading element between the 5th and 6th zone was used. Two compositions of wheat gluten (Amygluten 160) and plasticizer were tested. The third composition was equal to example 2 except that a different gluten material is used (Amygluten 110).

|  | Example 1 | Example 2 | Example 3 |
|---|---|---|---|
| Extrudate composition(w/w) | 61% Amygluten 160 34% glycerol 6% water | 66% Amygluten 160 28% glycerol 6% water | 66% Amygluten 110 28% glycerol 6% water |
| Screw speed (rpm) | 220 | 220 | 220 |
| Throughput (kg/h) | 132 | 122 | 122 |
| Extrudate temp. (°C) | 65-70 | 70-75 | 65-70 |
| Barrel temp. (°C) | 45 | 50 | 45 |
| SME (kJ/kg) | 211 | 228 | 210 |
| $A_w$ | 0.4 | 0.42 | 0.40 |
| Moisture (%) | 13 | 12 | 13 |
| Penetrometry (N) | 17 | 17 | 10 |
| Maximum Stress (Breaking force) (N) | 75 | 315 | 165 |
| Elongation at break (%) | 400 | 615 | 420 |
| Traction measurement: speed 10 mm/min Penetrometry test with cone 45°; penetration depth 6 mm | | | |

In the case of example 1, a homogeneous, plastic and deformable material was obtained. This material was moulded in a separate step, immediately after extrusion. After storing the moulded material for 24 hours at room temperature, a rubber-elastic product was obtained that could no longer be reshaped at room temperature.

In the case of example 2, lower plasticizer content resulted in a very elastic, extensible, rubber-like material that could not be further shaped by "cold" techniques such as lamination. However, cutting into any desired shape caused no problems, while hot molding allowed reshaping of the material.

Mechanical properties however changed during hot molding, providing compositions still being elastic but tougher (higher E-modulus) and less extensible.

In example 3 the same conditions of example 1 are used.
Amygluten 160 is replaced by Amygluten 110, having a shorter dough development time.

This resulted in a cohesive and very elastic, rubber-like material showing a very high extrudate swell (about 200%, calculated as extrudate diameter/die diameter*100). The material could be shaped by means of "cold" techniques such as lamination.

This illustrates that different types of vital wheat gluten can be used.

**Examples 4-6:**

In this series of examples a screw configuration was used containing the kneading elements at the very end of the screw. At the same time the last barrel elements are cooled with glycolated water (at -6°C). All experiments were performed using Amygluten 160.

|  | Example 4 | Example 5 | Example 6 |
|---|---|---|---|
| Extrudate composition(% w/w) | 68% Amygluten 160<br>27% glycerol<br>5% water | 72% Amygluten 160<br>24% glycerol<br>4% water | 72% Amygluten 160<br>20% glycerol<br>8% water |
| Screw speed (rpm) | 190 | 190 | 190 |
| Throughput (kg/h) | 147 | 139 | 139 |
| Extrudate temp. (°C) | 70-75 | 80-85 | 75-80 |
| Barrel temp. (°C) | 38 | 51 | 46 |
| SME (kJ/kg) | 121 | 208 | 158 |
| $A_w$ | 0.46 | 0.46 | 0.60 |
| Moisture (%) | 11 | 11 | 13.5 |
| Penetrometry (N) | 35 | 63 | 37 |
| Maximum Stress (Breaking force) (N) | 320 | 380 | 260 |
| Elongation at break (%) | 460 | 340 | 310 |
| Traction measurement: speed 10 mm/min<br>Penetrometry test with cone 45°; penetration depth 6 mm | | | |

In all three examples homogeneous, elastic rubber-like extrudates were obtained.

**Example 7-8: chewy treats for pets**

In these examples, a screw configuration was used containing the kneading elements at the very end of the screw. At the same time the last barrel elements are cooled with glycolated water (at -6°C).

Extrusion parameters, recipe and characterizations of extrudates are presented in table 1&2.

Shape of extrudates produced was a cylinder (diameter: 55 mm/length: 150 mm).

Table 1

| Example 7 | |
|---|---|
| Extrudate Composition (w/w) | 54.2% Amylogluten 160<br>22.5% Glycerol<br>11.9% Water<br>11.4% others dry ingredients |
| Screw speed (rpm) | 190 |
| Throughput (kg/h) | 122 |
| Extrudate temperature (°C) | 70-75 |
| SME (kJ/kg) | 167 |
| Aw | 0.66 |
| Moisture (%) | 16.8 |
| Maximal Elongation (%) | 512 |
| Chewing time (min) (250 g/piece) | 20 |

Table 2

| Example 8 | |
|---|---|
| Extrudate Composition (w/w) | 54.2% Amylogluten 160<br>22.5% Glycerol<br>11.9% Water<br>11.4% others dry ingredients |
| Screw speed (rpm) | 190 |
| Throughput (kg/h) | 124 |
| Extrudate temperature (°C) | 70-75 |
| SME (kJ/kg) | 185 |
| Aw | 0.64 |
| Moisture (%) | 15.9 |
| Maximal Elongation (%) | 490 |
| Chewing time (min) (250 g/piece) | 25 |

**Claims**

1. A method for manufacturing plasticized gluten compositions,
the method comprising the step of:

- mixing at least gluten and a plasticizer by applying a SME (Specific Mechanical Energy) of less than 250 kJ/kg,
- wherein the content of the plasticizer is below 40% weight of the total mixing mass.

2. The method according to claim 1,
wherein the mixing is carried out with a SME of less than 200 kJ/kg.

3. The method according to any of the preceding claims,
wherein the plasticizer is glycerol.

4. The method according to any of the preceding claims,
wherein the plasticizer content is below 35%.

5. The method according to any of the preceding claims,
wherein the plasticizer content is below 30 %.

6. The method according to any of the preceding claims,
wherein the plasticizer content is below 25 %.

7. The method according to any of the preceding claims,
wherein the plasticizer content is more than 20 %.

8. The method according to any of the preceding claims,
wherein the mixing is carried out with a SME of more than 75 kJ/KG, preferably more than 150kJ/KG, most preferably
150 kJ/KG.

9. The method according to any of the preceding claims,
wherein the temperature of the mixing equipment is set to a value between -10°C and 55°C.

10. The method according to any of the preceding claims,
wherein the temperature of the mixing equipment is set to a value between -10°C and 45°C.

11. The method according to any of the preceding claims,

wherein the temperature of the mixing equipment is set to a value between -10°C and 0°C.

12. The method according to any of the preceding claims,
    wherein the mixing is carried out continuously.

13. A petfood obtainable by a method according any of the preceding claims.

14. A chewy petfood treat, comprising plasticized gluten.

15. The petfood treat according to claim 14,
    having a maximum breaking force in the range of 200 N to 600 N.

16. The petfood treat according to claim 14,
    having a maximum breaking force in the range of 200 to 400 N.

17. The petfood treat according to claim 14,
    having a maximum breaking force in the range of 200 to 350 N.

18. The petfood treat according to any of claims 14 to 17,
    wherein the gluten is plasticized with a plasticizer containing glycerol.

19. The petfood according to any of claims 14 to 18,
    wherein the plasticized gluten is composed of 50-75 parts by weight vital wheat gluten and 50-25 parts by weight of a plasticizer.

20. The petfood according to any of claims 14 to 18,
    wherein the plasticized gluten is composed of 60-70 parts by weight vital wheat gluten and 40-30 parts by weight of a plasticizer.

21. The petfood according to any of claims 14 to 20,
    having a maximum elongation value of 200 to 650%.

22. The petfood according to any of claims 14 to 21,
    having a maximum elongation value of 300 to 400%.

23. The petfood according to any of claims 14 to 22,
    the petfood being a chewy dog food treat having a chewing time of at least 20 minutes.

24. A chewy dog food treat,
    comprising plasticized gluten being composed of 65-75 parts by weight of gluten and 35-25 parts by weight of a plasticizer,
    the treat having a maximum elongation value of 200 to 650% and a chewing time, when chewed by dogs, of at least 20 minutes.

25. The chewy dog food treat according to claim 24,
    wherein the plasticizer is glycerol.

**European Patent Office**

# EUROPEAN SEARCH REPORT

Application Number

EP 05 01 5356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/41701 A (VAN MELLE NEDERLAND B.V; VEGTER, GERT, HENDRIK) 30 May 2002 (2002-05-30) * claims 1,3,6 * | 1,2,4-9, 12-14, 19,20 | A23J3/18 A23K1/18 |
| Y | * the whole document * | 3,10,11, 15-17, 21-25 | |
| X | US 5 456 934 A (LEE ET AL) 10 October 1995 (1995-10-10)  * claim 1 * | 1,2,4-9, 12-14, 19,20 | |
| X | GB 1 433 976 A (QUAKER OATS CO) 28 April 1976 (1976-04-28) * claims 1,4,6 * | 13,14, 18-20 | |
| X | EP 1 066 759 A (CERESTAR HOLDING B.V) 10 January 2001 (2001-01-10) * claims 1,5-8,12 * * paragraph [0013] * | 13,14, 18-20 | |
| X | GONTARD N ET AL: "WATER AND GLYCEROL AS PLASTICIZERS AFFECT MECHANICAL AND WATER VAPOR BARRIER PROPERTIES OF AN EDIBLE WHEAT GLUTEN FILM" JOURNAL OF FOOD SCIENCE, INSTITUTE OF FOOD TECHNOLOGISTS, CHICAGO, IL, US, vol. 58, no. 1, January 1993 (1993-01), pages 206-211, XP000356616 ISSN: 0022-1147 * pages 206,208 * | 1,2, 4-14, 18-20 | |

**TECHNICAL FIELDS SEARCHED (IPC)**

A23K
A23J

-/--

The present search report has been drawn up for all claims

| Place of search | Date of completion of the search | Examiner |
|---|---|---|
| The Hague | 8 November 2005 | Bondar, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 743 529 A1

**European Patent Office**

**EUROPEAN SEARCH REPORT**

Application Number

EP 05 01 5356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | POUPLIN M; REDL A; GONTARD N: "Glass transition of wheat gluten plasticized with water, glycerol, or sorbitol." JOURNAL OF AGRICULTURAL AND FOOD CHEMISTRY, vol. 47, no. 2, 1999, pages 538-543, XP002352916 * page 540 * | 1,2,4-8, 18-20 | |
| Y | US 2 586 675 A (LUTZ WOLFGANG J) 19 February 1952 (1952-02-19) * the whole document * | 3,10,11, 15-17, 21-25 | |
| Y | US 6 007 858 A (GUM ET AL) 28 December 1999 (1999-12-28) * the whole document * | 3,10,11, 15-17, 21-25 | |

TECHNICAL FIELDS SEARCHED (IPC)

The present search report has been drawn up for all claims

| Place of search | Date of completion of the search | Examiner |
|---|---|---|
| The Hague | 8 November 2005 | Bondar, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

## ANNEX TO THE EUROPEAN SEARCH REPORT
## ON EUROPEAN PATENT APPLICATION NO.

EP 05 01 5356

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2005

| Patent document cited in search report | | Publication date | Patent family member(s) | | Publication date |
|---|---|---|---|---|---|
| WO 0241701 | A | 30-05-2002 | AU<br>NL | 2280002 A<br>1016715 C2 | 03-06-2002<br>29-05-2002 |
| US 5456934 | A | 10-10-1995 | AU<br>CA<br>WO | 1724595 A<br>2178946 A1<br>9516367 A1 | 03-07-1995<br>22-06-1995<br>22-06-1995 |
| GB 1433976 | A | 28-04-1976 | BE<br>CA<br>DK<br>FR<br>LU<br>NL<br>SE | 824217 A1<br>1035994 A1<br>650374 A<br>2274235 A1<br>71622 A1<br>7500230 A<br>7500285 A | 09-07-1975<br>08-08-1978<br>13-12-1975<br>09-01-1976<br>09-12-1975<br>16-12-1975<br>15-12-1975 |
| EP 1066759 | A | 10-01-2001 | JP<br>NO<br>US | 2001061415 A<br>20003482 A<br>6818245 B1 | 13-03-2001<br>08-01-2001<br>16-11-2004 |
| US 2586675 | A | 19-02-1952 | NONE | | |
| US 6007858 | A | 28-12-1999 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6007858 A
- WO 0008944 A

- US 6818245 B
- US 2586675 A

**Non-patent literature cited in the description**

- **WRIGLEY et al.** Glutenin polymers - Natures largest proteins. *Royal Australian Chemical Institute: North Melbourne, Australian,* 1996, 316
- **GRAVELAND, A. et al.** A model for the molecular structure of the glutenins from wheat flour. *J Cereal Sci.,* 1985, vol. 3, 1-6
- **HOSENEY, R.C. et al.** Wheat gluten: a glassy polymer. *Cereal Chem.,* 1986, vol. 63, 285-286
- **ATTENBURROW et al.** Rheological properties of wheat gluten. *J. Cereal Sci.,* 1990, vol. 12, 1-14

- **REDL, A. et al.** Rheological properties of gluten plasticized with glycerol: dependence on temperature, glycerol content and mixing conditions. *Rheol. Acta,* 1999, vol. 38, 311-320
- **A. REDL ; S. GUILBERT et al.** Rheologicial properties of gluten plasticized with glycerol: dependence on temperature, glycerol content and mixing conditions. *Rheologica Acta,* 1999, vol. 38, 311-320
- *Les Cahiers de Rhéologie,* 1997, 339-347
- *J. Agric. Food Chem.,* 1999, vol. 47, 538-543
- *Cereal Chemistry,* 1999, vol. 76, 361-369